# EUROPÄISCHE PATENTSCHRIFT

(11) **EP 4 506 631 B1**
(45) Veröffentlichungstag und Bekanntmachung des Hinweises auf die Patenterteilung: **12.11.2025**
(21) Anmeldenummer: 23190234.7
(22) Anmeldetag: 08.08.2023
(51) Int. Cl.: F24F 3/14, B01D 53/26, F24F 5/00

(54) **LUFTENTFEUCHTUNGSEINRICHTUNG UND -VERFAHREN**
AIR DEHUMIDIFICATION DEVICE AND METHOD
DISPOSITIF ET MÉTHODE DE DÉSHUMIDIFICATION

(43) Veröffentlichungstag der Anmeldung: 12.02.2025
(73) Patentinhaber: FRONIUS INTERNATIONAL GmbH, 4643 Pettenbach (AT)
(72) Erfinder: Kreuzer, Harald, 4600 Wels-Thalheim (AT); Angerer, Christian, 4600 Wels-Thalheim (AT); Fink, Reinhold, 4600 Wels-Thalheim (AT)
(74) Vertreter: Patentanwälte Pinter & Weiss OG

(56) Entgegenhaltungen:
- JP-A- H07 204 447
- JP-A- H10 118 442
- US-A- 5 884 486

## Beschreibung

Die gegenständliche Erfindung betriff eine Luftentfeuchtungseinrichtung mit einem Peltier-Element mit einer Kühlplatte mit einer Kühloberfläche, die bei Anlegen einer elektrischen Gleichspannung an das Peltier-Element kühlbar ist. Die Erfindung betrifft ferner die Verwendung einer erfindungsgemäßen Luftentfeuchtungseinrichtung in einem Gehäuse eines Gerätes und ein Verfahren zur Luftentfeuchtung mit einer erfindungsgemäßen Luftentfeuchtungseinrichtung.

Elektrische Geräte werden häufig mit einem Gehäuse ausgeführt, das weitestgehend geschlossen ist, um einen Luftaustausch mit der Umgebung weitestgehend zu reduzieren. Hierzu werden oftmals Gummidichtungen zwischen Gehäuseteilen eingesetzt. Solche Gehäuse sind aber nicht hermetisch dicht, sodass es im Einsatz immer zu einem gewissen Austausch von Luft mit der Umgebung kommt. Dabei dringt Luft mit einer bestimmten Luftfeuchtigkeit von außen in den Gehäuseinnenraum ein. Das kann beispielsweise durch das Aufheizen und Abkühlen des Gehäuses und der Luft im Gehäuseinnenraum während des Betriebs des Geräts und damit einhergehenden Druckunterschieden zwischen Umgebung und Gehäuseinnenraum verursacht sein. Dadurch kann beispielsweise Umgebungsluft von außen in den Gehäuseinnenraum angesaugt werden. Aber auch durch Undichtheiten bei Dichtungen, beispielsweise aufgrund von Montage- oder Installationsfehlern, oder aufgrund der Alterung der Dichtung kann Luftfeuchtigkeit oder sogar Wasser in das Gehäuse eindringen. In diesem Zusammenhang können beispielsweise auch sogenannte Kabelschläuche (aus Metall oder Kunststoff) erwähnt werden, wo derartige Installationsfehler vorkommen können. Als Kabelschlauch versteht man insbesondere starre oder flexible metallische Rohre, in welchen elektrische Leitungen geführt werden. Diese werden im Wesentlichen aus Brandschutzgründen in manchen Ländern verwendet und sind in der Regel geerdet. Werden die Enden eines solchen Kabelschlauches mit den geführten elektrischen Leitern nicht ordnungsgemäß abgedichtet, so kann es im Inneren der Rohre zu Kondensatbildung kommen und folglich kann das Kondensat auch in den Gehäuseinnenraum eines Gehäuses eindringen. Die Luftfeuchtigkeit kann an Bauteilen im Gehäuseinnenraum kondensieren. Das entstehende Kondenswasser ist im Gehäuse gefangen. Kondenswasser in Gehäusen von elektrischen Geräten kann zu großen Problemen führen, wenn die Luftfeuchtigkeit an ungünstigen Stellen kondensiert oder sich das Wasser an ungünstigen Stellen sammelt. Wasser an metallischen Komponenten, wie elektrische Kontakte, metallische Gehäusebestandteile, kann zu Korrosion führen, die die Funktion des Geräts beeinträchtigen kann. Wasser an elektrisch leitenden Bauteilen kann zu unerwünschten elektrischen Kontakten, Kurzschlüssen, Kriechströmen und Isolationsfehlern führen, die zu einer Beeinträchtigung der Funktion des Geräts bis hin zur Beschädigung oder Zerstörung des Geräts führen können.

Um solche Probleme zu vermeiden ist es bereits bekannt, im Gehäuse Trocknungsmittel auf kristalliner oder chemischer Grundlage einzusetzen, wie beispielsweise Silicagel, Zeolithe oder Calciumsulfat. Solche Trocknungsmittel haben großes Potential Wasser zu binden, sind aber in der Aufnahmekapazität begrenzt. In einem Gehäuse findet in der Regel auch keine Regeneration des Trocknungsmittels statt. Solche Trocknungsmittel sättigen daher im Betrieb, was eine Wartung des Geräts zum Austausch des Trocknungsmittels erforderlich macht.

Auch ist es bekannt, an Gehäusen an der Unterseite, an der sich Wasser sammelt, Ventile oder Membranen anzuordnen, die das Wasser nach außen führen. Der Nachteil dabei ist allerdings, dass die Luftfeuchtigkeit im Gehäuseinnenraum dabei schon kondensiert ist, was möglicherweise schon zu den oben genannten Problemen geführt haben kann.

Ebenso ist aus dem Stand der Technik bekannt, Peltier-Elemente zu Luftentfeuchtung einzusetzen. Dabei wird Luftfeuchtigkeit auf der kalten Oberfläche des Peltier-Elements kondensiert und abgeführt. Das Kondenswasser bleibt dabei aber im Gehäuse und könnte von Luft im Gehäuse sogar als Luftfeuchtigkeit wieder aufgenommen werden, beispielsweise wenn sich die Luft erwärmt. Die EP 3 267 120 A1 beschreibt diesen Ansatz zur Entfeuchtung eines Raumes.

JP 3701414 B2 beschreibt die Entfeuchtung eines Gehäuses mittels Peltier-Element und einem Protonen-Austausch-Membran (PEM)-Elektrolyseur, der das entstehende Kondenswasser in Wasserstoff und Sauerstoff zerlegt, die aus dem Gehäuse abgeführt werden. Damit kann auch das am Peltier-Element entstehende Kondenswasser aus dem Gehäuse entfernt werden. Die Verwendung eines Protonen-Austausch-Membran-Elektrolyseurs ist allerdings aufwendig und teuer. Die Verwendung eines PEM-Elektrolyseurs benötigt zudem mehr Bauraum im Gehäuse und das Gesamtsystem wird komplexer, weil der Elektrolyseur integriert werden muss. Es wird auch eine weitere Öffnung im Gehäuse benötigt, die wiederum gegen die Umgebung abgedichtet werden muss. Nicht zuletzt ist ein PEM-Elektrolyseur auch empfindlich im Betrieb, beispielsweise gegen "Vergiftung" durch Fremdgase wie Kohlenmonoxid oder Schwefelwasserstoff, was zur Degeneration des Elektrolyseurs führen kann. Zudem reduziert auch die Kunststoffmembran im PEM-Elektrolyseur die Lebensdauer, was wiederum eine vorzeitige Wartung des Geräts zur Folge haben kann. JP H10 118442 A und US 5 884 486 A offenbaren weitere Luftentfeuchtungseinrichtungen mit einem Peltierelement gemäß dem Oberbegriff von Anspruch 1.

Es ist daher eine Aufgabe der gegenständlichen Erfindung, eine Luftentfeuchtungseinrichtung und ein Verfahren zur Luftentfeuchtung anzugeben, insbesondere für ein Gehäuse, mit denen eine einfache und sichere Entfeuchtung der Umgebungsluft, insbesondere in einem Gehäuseinnenraum eines Gehäuses, möglich ist.

Erfindungsgemäß wird eine Luftentfeuchtungseinrichtung mit den Merkmalen von Anspruch 1 vorgeschlagen. Bevorzugte Ausführungsformen sind in den Unteransprüchen definiert.

Die Wasserelektrolyse kann verbessert werden, wenn auf der Kühloberfläche der Kühlplatte mehrere erste Elektroden und mehrere zweite Elektroden beabstandet voneinander angeordnet sind, wobei die mehreren ersten Elektroden elektrisch miteinander und mit dem ersten Anschlusspol verbunden sind und die mehreren zweiten Elektroden elektrisch miteinander und mit dem zweiten Anschlusspol verbunden sind. Hierbei ist es vorteilhaft, wenn erste und zweite Elektroden möglichst großflächig, beabstandet ineinandergreifen, was erreicht werden kann, wenn die mehreren ersten und zweiten Elektroden auf der Kühloberfläche kammförmig, spiralförmig, mäanderförmig oder fächerförmig, vorzugsweise mit abwechselnden ersten und zweiten Elektroden, angeordnet sind.

Eine Steuereinheit kann eine Kühlleistung des Peltier-Elements steuern, um eine Temperatur der Kühloberfläche unterhalb des Taupunkts der Luft im Bereich des Peltier-Elements aber oberhalb eines Gefrierpunktes des Kondenswassers zu halten. Die Steuereinheit kann dazu eine an das Peltier-Elemente angelegte Gleichspannung steuern.

Zur Steuerung der Kühlleistung kann ein Feuchtigkeitssensor vorgesehen sein, um eine Luftfeuchtigkeit im Bereich der Kühloberfläche zu messen und/oder ein Temperatursensor vorgesehen sein, um eine Temperatur der Kühloberfläche oder im Bereich der Kühloberfläche zu messen, wobei die Steuereinheit die gemessene Luftfeuchtigkeit und/oder die gemessene Temperatur zur Steuerung der Kühlleistung des Peltier-Elements verwendet.

Ferner kann vorteilhaft ein Stromsensor vorgesehen sein, um den über eine erste Elektrode und eine zweite Elektrode fließenden elektrischen Elektrolysestrom zu messen, wobei die Steuereinheit die Wasserelektrolyse mit dem gemessenen Elektrolysestrom steuern kann. Das erfolgt vorteilhaft durch das Steuern der an die erste und zweite Elektrode angelegte Gleichspannung.

Ebenso vorteilhaft ist es, wenn ein Stromsensor vorgesehen ist, um einen über eine erste Elektrode und eine zweite Elektrode fließenden elektrischen Elektrolysestrom zu messen und die Steuereinheit eingerichtet ist, aus dem gemessenen Elektrolysestrom die Menge an durch Wasserelektrolyse erzeugten Wasserstoff zu bestimmen. Damit kann sichergestellt werden, dass die Konzentration an Wasserstoff eine vorgegebene zulässige Wasserstoffkonzentration nicht überschreitet.

Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt
Fig.1 eine erfindungsgemäße Luftentfeuchtungseinrichtung und
Fig.2 die Verwendung der erfindungsgemäße Luftentfeuchtungseinrichtung in einem Gehäuse.

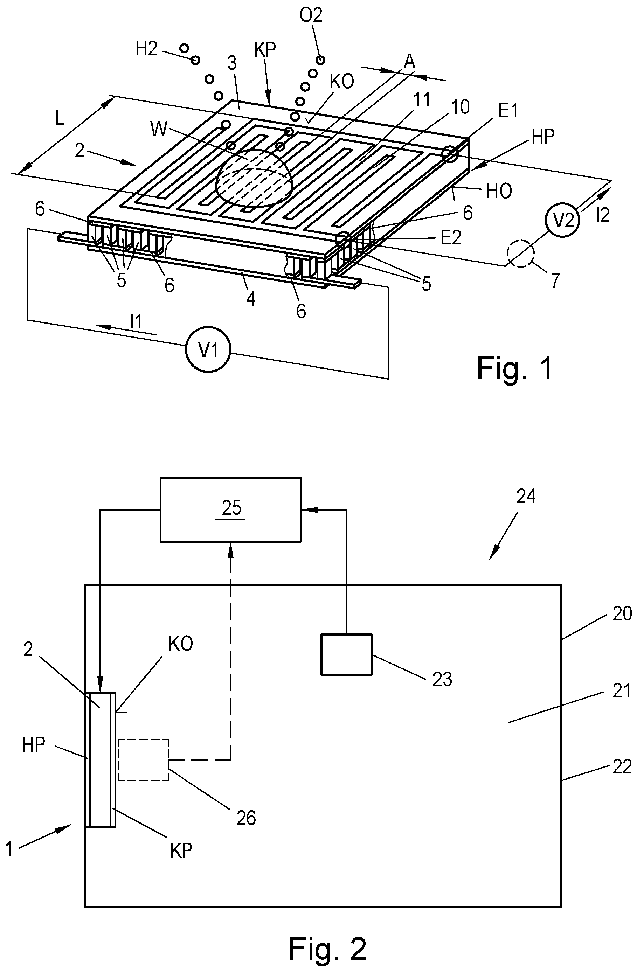

Die in Fig.1 dargestellte erfindungsgemäße Luftentfeuchtungseinrichtung 1, insbesondere zur Entfeuchtung eines Gehäuseinnenraumes 21 eines Gehäuses 20 eines, insbesondere elektrischen, Geräts 24, nutzt ein Peltier-Element 2.

Ein Peltier-Element 2 ist ein hinlänglich bekanntes elektrisches Bauelement, das im Wesentlichen aus zwei Platten 3, 4, in der Regel aus Aluminiumoxid-Keramik, besteht, welche in einem Abstand beabstandet nebeneinander liegen. Zwischen den Platten 3, 4 befindet sich eine Anordnung von Halbleiterelementen 5 (in Fig.1 sind aus Gründen der Übersichtlichkeit nur einige dargestellt) bestehend aus zwei unterschiedliche Halbleiterwerkstoffen (p- und n-Dotierung). Wird ein elektrischer Strom I1 durch eine Anordnung der Halbleiterelemente 5 geleitet, so muss für die Aufrechterhaltung des Stromflusses je nach Halbleiterwerkstoff entweder Energie aufgenommen oder abgegeben werden. Eine Energieaufnahme wird über Wärmeentnahme aus dem Material der Grenzfläche bewirkt und eine Energieabgabe erwärmt das Material der Grenzschicht. Die Halbleiterelemente 5 mit unterschiedlichen Halbleiterwerkstoffen sind elektrisch in Serie geschaltet, wobei sich die unterschiedlichen Halbleiterwerkstoffen abwechseln. Die räumliche Anordnung der einzelnen Halbleiterelemente 5 wird so gewählt, dass sich die energieaufnehmenden Übergänge ausschließlich auf der einen Peltierseite und die energieabgebenden Übergänge auf der anderen Peltierseite befinden. Der elektrische Strom I1, beispielsweise verursacht durch Anlegen einer elektrischen Gleichspannung V1 an die Halbleiterelemente 5, läuft also zwischen den beiden Platten 3, 4 über die Halbleiterelemente 5 und über an den Platten 3, 4 angeordneten und die Halbleiterelemente 5 seriell verbindenden Kontaktelementen 6 hin und her, wobei die Platten 3, 4 aber natürlich nicht elektrisch leitend sind. Damit bildet, je nach Richtung des Stromflusses, eine der beiden Platten 3, 4 eine Kühlplatte KP mit einer außen liegenden Kühloberfläche KO aus und die andere der beiden Platten 3, 4 eine Heizplatte HP mit einer Heizoberfläche HO an der gegenüberliegenden Außenfläche des Peltier-Elements 2. Dieses Grundprinzip eines Peltier-Elements 2 ist hinlänglich bekannt, weshalb hier nicht näher darauf eingegangen werden muss.

Erfindungsgemäß ist auf der Kühloberfläche KO der Kühlplatte KP des Peltier-Elements 2 zumindest eine erste Elektrode 10 und zumindest eine zweite Elektrode 11 angeordnet. Die zumindest eine erste Elektrode 10 und zumindest eine zweite Elektrode 11 sind einen Abstand A beabstandet voneinander angeordnet. Der Abstand A liegt vorzugsweise im Bereich von 0,1 bis 5 mm.

Die zumindest eine erste Elektrode 10 ist mit einem ersten Anschlusspol E2 verbunden und die zumindest eine zweite Elektrode 11 mit einem zweiten Anschlusspol E1. An die Anschlusspole E1, E2 wird eine elektrische Gleichspannung V2 angelegt, sodass auf der Kühloberfläche KO zwischen der zumindest einen ersten Elektrode 10 und der zumindest einen zweiten Elektrode 11 die elektrische Gleichspannung V2 anliegt. Die Anschlusspole E1, E2 müssen aber nicht auf der Kühloberfläche KO ausgebildet sein.

In einer bevorzugten Anordnung sind die erste Elektrode 10 und die zweite Elektrode 11 länglich ausgebildet und erstrecken sich eine bestimmte Länge L auf der Kühloberfläche KO. Die Länge L ist natürlich durch die Dimension der Kühlplatte KP begrenzt. Die Länge L wird vorzugsweise so groß wie möglich ausgeführt. Die Längen L der Elektroden 10, 11 müssen aber nicht zwingend gleich sein. Die erste Elektrode 10 und die zweite Elektrode 11 mit der jeweiligen Länge L sind vorzugsweise parallel zu einander auf der Kühloberfläche KO der Kühlplatte KP angeordnet (wie in Fig.1 dargestellt). Bevorzugt sind die Elektroden 10, 11 parallel zueinander und parallel zu einer Seite des Peltier-Elements 2.

Vorzugsweise sind auf der Kühloberfläche KO der Kühlplatte KP mehrere erste Elektroden 10 und mehrere zweite Elektroden 11 angeordnet, beispielsweise abwechselnd eine erste Elektrode 10 und eine zweite Elektrode 11 (wie in Fig.1). Die Abstände A zwischen den jeweiligen ersten und zweiten Elektroden 10, 11 müssen aber nicht gleich sein. Vorzugsweise sind alle ersten und zweiten Elektroden 10, 11 länglich ausgebildet und erstrecken sich eine bestimmte Länge L (die wiederum nicht für alle Elektroden 10, 11 gleich sein müssen) auf der Kühloberfläche KO. Die ersten Elektroden 10 und die zweiten Elektroden 11 mit der jeweiligen Länge L sind vorzugsweise parallel zu einander auf der Kühloberfläche KO der Kühlplatte KP angeordnet (wie in Fig.1 dargestellt). Die mehreren ersten Elektroden 10 sind elektrisch miteinander und mit dem ersten Anschlusspol E2 verbunden und die mehreren zweiten Elektroden 11 sind elektrisch miteinander und mit dem zweiten Anschlusspol E1 verbunden. Damit liegt zwischen jeweils einer ersten Elektrode 10 und zweiten Elektrode 11 die elektrische Gleichspannung V2 an.

Die Elektroden 10, 11 können kammförmig (wie im Ausführungsbeispiel nach Fig.1), spiralförmig, mäanderförmig oder fächerförmig, oder beliebig anders, oder einer Kombination daraus, auf der Kühloberfläche KO angeordnet sein, wobei es vorteilhaft ist, wenn die verfügbare Kühloberfläche KO möglichst gut für die Anordnung der Elektroden 10, 11 ausgenutzt wird.

Die Elektroden 10, 11 sind vorzugsweise direkt auf der Kühloberfläche KO angeordnet, beispielsweise auf die Kühloberfläche KO aufgedampft, aufgedruckt, beschichtet oder angeklebt oder auf andere geeignete Weise auf der Kühloberfläche KO befestigt.

Als Elektrodenmaterial können bevorzugt korrosionsbeständige Metalle, insbesondere Edelmetalle wie Gold, Silber, Platin oder Palladium und/oder deren Legierungen eingesetzt werden. Ferner könnten auch weniger edle Metalle wie beispielsweise Titan und deren Legierungen oder auch verzinnte Kupfer-Elektroden oder nicht-metallische Elektroden, wie beispielsweise Graphit-Elektroden, zum Einsatz kommen.

Nachdem die Platten 3, 4 (Kühlplatte KP und Heizplatter HP) des Peltier-Elements 2 aufgrund des zugrunde liegenden Grundprinzips (siehe oben) elektrisch nichtleitend sind, fließt in der Regel trotz der zwischen den Elektroden 10, 11 angelegten Gleichspannung V2 kein Elektrolysestrom I2, weil es keinen geschlossenen elektrischen Stromkreis gibt, weil die Elektroden 10, 11 elektrisch nicht miteinander verbunden sind. Bildet sich auf der Kühloberfläche KO jedoch Kondenswasser W (in Fig.1 als Tropfen angedeutet) aus der Luftfeuchtigkeit der an der Kühloberfläche KO anliegenden Luft im Gehäuseinnenraum 21, wird ein elektrischer Stromkreis geschlossen und es kommt zu einem Fluss eines Elektrolysestromes I2 über die Elektroden 10, 11 und das Kondenswasser W. Das Kondenswasser W wird dabei durch den fließenden Elektrolysestrom I2 in Wasserstoff H2 und Sauerstoff O2 zerlegt (in Fig.1 angedeutet). Das Kondenswasser W fungiert dabei als Elektrolyt einer ablaufenden Wasserelektrolyse.

Der für die Wasserelektrolyse benötigte Elektrolysestrom I2 oder die hierfür benötigte Gleichspannung V2 kann aufgrund der bekannten ablaufenden Redoxreaktion als bekannt vorausgesetzt werden. Gegebenenfalls könnte das für eine vorgegebene Elektrodenanordnung auch durch Versuche ermittelt werden.

Die durch die Wasserelektrolyse entstehenden Gase H2 und O2 liegen im Gehäuse 20 in so geringen Konzentrationen vor, dass keine Explosionsgefahr besteht. Eine signifikante Konzentration von Wasserstoff H2 im Gehäuse 20 wird auch durch die physikalischen Eigenschaften des Wasserstoffes H2 verhindert. Wasserstoff H2 diffundiert bekanntermaßen gut durch die meisten herkömmlichen Materialien, wie Metalle oder Kunststoffe, die beispielsweise auch bei herkömmlichen Gehäusen 20 eingesetzt werden. Der durch die Wasserelektrolyse entstehende Wasserstoff H2 entweicht daher durch Diffusion aus dem Gehäuseinnenraum. Damit wird keine zusätzliche Öffnung am Gehäuse 20 zur Abfuhr des Wasserstoffes H2 benötigt. Zudem verbinden sich Wasserstoff H2 und Sauerstoff O2 nur durch Zuführen einer entsprechenden Aktivierungsenergie, die im Gehäuse natürlich fehlt. Eine Wiederverbindung Wasserstoff H2 und Sauerstoff O2 im Gehäuse 20 zu Wasser kann daher ausgeschlossen werden.

Damit kann mit der erfindungsgemäßen Luftentfeuchtungseinrichtung 1 eine Entfeuchtung der Luft in einem Gehäuseinnenraum 21 eines Gehäuses 20 auf ein gewünschtes Maß reduziert werden. Das Gehäuse 20 kann grundsätzlich jegliches Gehäuse sein, in dem die Luftfeuchtigkeit zu Problemen führen kann. Typische Gehäuse 20 sind Gehäuse elektrischer Geräte, wie ein Gehäuse eines Schweißgeräts, eines (Photovoltaik (PV)) Wechselrichters oder eines Batterieladegeräts, in denen es durch den Betrieb zu erheblichen Temperaturschwankungen im Gehäuse 20 kommen kann.

Zur Entfeuchtung des Gehäuseinnenraums 21 wird die Luftentfeuchtungseinrichtung 1 in geeigneter Weise im Gehäuseinnenraum 21 angeordnet, wobei die Kühloberfläche KO des Peltier-Elements 3 mit den Elektroden 10, 11 vorzugsweise von einer Gehäusewand 22 abgewandt angeordnet ist. Die Heizplatte HP des Peltier-Elements 3 könnte an der Gehäusewand 22 angeordnet sein (wie in Fig.2), um die Wärme des Peltier-Elements 3 durch Wärmeleitung direkt in die Gehäusewand 22 abzuleiten. Die Heizplatte HP könnte aber auch Teil der Gehäusewand 22 sein und auf diese Weise Wärme des Peltier-Elements 3 durch Wärmestrahlung in die Umgebung des Gehäuses 20 abzugeben.

Falls es zu Wasseransammlungen im Gehäuse 20 kommen, werden diese durch die trockenere Luft im Gehäuseinnenraum 21 rascher verdunsten und so vollständig in den gasförmigen Zustand übergehen. Das verdunstete Wasser erhöht die Luftfeuchtigkeit im Gehäuseinnenraum 21, die dann über die Luftentfeuchtungseinrichtung 1 wiederum reduziert wird.

Für den Betrieb der Luftentfeuchtungseinrichtung 1 kann es auch vorteilhaft sein, wenn im Gehäuseinnenraum 21 ein Feuchtigkeitssensor 23 (Fig.2) angeordnet ist, um die Luftfeuchtigkeit im Gehäuseinnenraum 21 zu messen. Nur wenn die Luftfeuchtigkeit einen vorgegebenen Grenzwert überschreitet, kann die Luftentfeuchtungseinrichtung 1 aktiviert werden, beispielsweise durch das Anlegen einer Gleichspannung V1 und V2, um die Luftfeuchtigkeit auf eine vorgegebene Zielfeuchtigkeit zu reduzieren. Hierfür kann eine Steuereinheit 25 vorgesehen sein (wie in Fig.2), die die gemessene Luftfeuchtigkeit vom Feuchtigkeitssensor 2 erhält und die die Luftentfeuchtungseinrichtung 1 bedarfsweise aktiviert.

Die Steuereinheit 25 kann sowohl außerhalb des Gehäuses 20 des Geräts 24 (wie in Fig.2) oder innerhalb des Gehäuses 20 des Geräts 24 angeordnet sein. Die Steuereinheit 25 könnte auch in einem Steuergerät des Geräts 24 integriert sein, beispielsweise in einem Wechselrichter-Steuergerät, Batterieladegerät-Steuergerät oder einem Schweißgerät-Steuergerät.

Mit der Steuereinheit 25 kann auch die Kühlleistung des Peltier-Elements 3 gesteuert werden, beispielsweise um die Temperatur an der Kühloberfläche KO immer unterhalb des Taupunkts der Luft im Gehäuseinnenraum 21 zu halten, aber immer oberhalb von 0°C um ein Gefrieren von Wasser auf der Kühloberfläche KO zu verhindern. Die Kühlleistung kann beispielsweise über die Gleichspannung V1 des Peltier-Elements 2 gesteuert werden. Hierzu kann auch eine Temperaturmessung an der Kühloberfläche KO oder im Bereich der Kühloberfläche KO mittels eines Temperatursensors 26 (wie in Fig.2 gestrichelt angedeutet) vorgesehen sein. Zur Steuerung der Kühlleistung des Peltier-Elements 3 kann auch auf bekannte Hilfsmittel zurückgegriffen werden, wie beispielsweise dem Mollier-h,x-Diagramm, das in geeigneter Weise in der Steuereinheit 25 hinterlegt sein kann.

Auch über den Elektrolysestrom I2 zur Wasserelektrolyse können Rückschlüsse gezogen werden. Der Elektrolysestrom I2 kann beispielsweise durch einen Stromsensor 7 (wie in Fig.1 angedeutet) gemessen werden und der Steuereinheit 25 zur Verfügung gestellt werden. Anhand des fließenden Elektrolysestromes I2 kann geschlossen werden, wieviel Wasser momentan in Wasserstoff H2 und Sauerstoff O2 aufgespalten wird. Diese Gesetzmäßigkeit wird durch das bekannte Faraday'sche Gesetz beschrieben, nach der die bei der Elektrolyse entstehende Stoffmenge (von Wasserstoff und Sauerstoff) linear proportional zum Elektrolysestrom I2 ist. Über den Elektrolysestrom I2 kann damit auf die Elektrolyse Einfluss genommen werden., wobei der Elektrolysestrom I2 von der Steuereinheit 25 eingestellt werden kann, beispielsweise über die an die Elektroden 10, 11 angelegte Gleichspannung V2.

Durch gezielte Dotierung der Keramikoberfläche des Peltier-Elements 2 ließe sich auch die elektrische Leitfähigkeit und folglich die Elektrolyseleistung steigern bzw. beeinflussen. Vorzugsweise werden zur Dotierung Alkali- und/oder Erdalkalielemente verwendet.

Nachdem sich die Leitfähigkeiten von Wasser und von Eis unterscheiden, kann aus der Strommessung des Elektrolysestromes I2 auch auf ein Gefrieren von Wasser auf der Kühloberfläche KO geschlossen werden.

Damit ist auch eine Überwachung der Wasserstoffkonzentration im Gehäuse 20 möglich. Über den gemessenen Elektrolysestrom I2 kann zu vorgegebenen Zeitpunkten oder laufend die Menge an Wasserstoff H2 ermittelt werden. Diese Menge kann laufend oder während eines bestimmten Zeitraumes erfasst und aufsummiert werden. Gleichzeitig ist die Diffusionsmenge von Wasserstoff H2 durch das Gehäuse 20 bekannt, beispielsweise aufgrund von Simulation oder Messungen. Damit kann eine Wasserstoffbilanz des entstehenden und abgeführten Wasserstoffes H2 gemacht werden, beispielsweise in der Steuereinheit 25, um eine aktuelle Wasserstoffkonzentration im Gehäuse 20 erhalten. Es kann eine zulässige Wasserstoffkonzentration im Gehäuse 20 festgelegt sein, beispielsweise unterhalb oder maximal bei der bekannten unteren Explosionsgrenze für Wasserstoff. Bei Wasserstoff H2 liegt die untere Explosionsgrenze bei 4 Vol%. In der Praxis wird man die zulässige Wasserstoffkonzentration im Gehäuse 20 jedoch deutlich unter der unteren Explosionsgrenze für Wasserstoff festlegen. Erreicht die Wasserstoffkonzentration im Gehäuse 20 die vorgegebene zulässige Wasserstoffkonzentration, kann die Wasserelektrolyse eingestellt oder reduziert werden, bis über Diffusion ausreichend Wasserstoff H2 das Gehäuse 20 verlassen hat.

Für die Luftentfeuchtung kann es auch vorteilhaft sein, im Gehäuse 20 und im Bereich der Luftentfeuchtungseinrichtung 1 einen Umluftlüfter vorzusehen, um durch Umwälzung der Luft im Gehäuse 20, insbesondere im Bereich der Luftentfeuchtungseinrichtung 1, die Entfeuchtung der Luft zu verbessern und zu steigern. Ein solcher Umluftkühler sollte aber keine Luft von außerhalb des Gehäuses 20 ansaugen oder für einen Luftaustausch mit der Umgebung sorgen, wie beispielsweise im Falle eines Kühlgebläses bei gewissen, teilweise offenen Gehäusen 20.

Eine Messung des Elektrolysestrom I2 zur Wasserelektrolyse kann aber auch in bekannter Weise für eine Leitwertbestimmung des Wassers genutzt werden. Der elektrische Leitwert kann in bekannter Weise aus der elektrischen Spannung, dem fließenden Strom und der bekannten Geometrie der Elektroden 10, 11 bestimmt werden. Der Leitwert des Wassers verändert sich bekanntermaßen mit im Wasser gelösten Stoffen und kann damit als Maß für Veränderungen im Gehäuse 20 oder zur Früherkennung von Bauteildefekten oder auch zur Kontrolle des bestimmungsgemäßen und sachgemäßen Einsatzes des Geräts 24 mit dem Gehäuse 20 verwendet werden.

Beispielsweise verursachen bestimmte Gase chemische Reaktionen an Bauteilen im Gehäuse 20 des Geräts 24. Durch solche chemischen Reaktionen können Stoffe entstehen, die in die Luft im Gehäuseinnenraum 21 aufgenommen werden. Auf diese Weise gelangen solche Stoffe auch in das auf der Kühloberfläche KO kondensierte Wasser W und verändern über die Zeit den Leitwert des Wassers W. Die Erfassung des Leitwerts über einen bestimmten Zeitraum kann daher ein Maß für das Vorhandensein solcher Stoffe im Gehäuse 20 sein, was einen Rückschluss auf bestimmte Vorgänge im Gehäuse 20 zulässt.

Beispielsweise wurde festgestellt, dass PV-Wechselrichter mitunter in Tierställen angebracht werden. In Tierställen gibt es in der Umgebung des PV-Wechselrichters neben der Umgebungsluft Fremdgase, wie Methan, Ammoniak, Schwefelwasserstoff usw. Gelangen solche Gase in das Gehäuse 20 des PV-Wechselrichters können diese auf Bauteilen und Komponenten des Wechselrichters, wie elektrischen Kontakten, die Bildung anorganischer Salze verursachen. Diese Salze können in die Luft im Gehäuseinnenraum 21 gelangen und können durch die Leitwertbestimmung erkannt werden. Ferner könnte der Aufstellungsort als Parameter in der Steuerung integriert sein und somit ein Abgleich mit zu erwartenden Fremdgasen durchgeführt werden.

## Patentansprüche

1. Luftentfeuchtungseinrichtung mit einem Peltier-Element (2) mit einer Kühlplatte (KP) mit einer Kühloberfläche (KO), die bei Anlegen einer elektrischen Gleichspannung (V1) an das Peltier-Element (2) kühlbar ist, **dadurch gekennzeichnet, dass** auf der Kühloberfläche (KO) der Kühlplatte (KP) des Peltier-Elements (2) zumindest eine erste Elektrode (10) und zumindest eine zweite Elektrode (11) beabstandet voneinander angeordnet sind und dass die zumindest eine erste Elektrode (10) mit einem ersten Anschlusspol (E2) verbunden ist und die zumindest eine zweite Elektrode (11) mit einem zweiten Anschlusspol (E1) verbunden ist und an die Anschlusspole (E1, E2) eine elektrische Gleichspannung (V2) anlegbar ist.

2. Luftentfeuchtungseinrichtung nach Anspruch 1, **dadurch gekennzeichnet, dass** auf der Kühloberfläche (KO) der Kühlplatte (KP) mehrere erste Elektroden (10) und mehrere zweite Elektroden (11) beabstandet voneinander angeordnet sind, wobei die mehreren ersten Elektroden (10) elektrisch miteinander und mit dem ersten Anschlusspol (E2) verbunden sind und die mehreren zweiten Elektroden (11) elektrisch miteinander und mit dem zweiten Anschlusspol (E1) verbunden sind.

3. Luftentfeuchtungseinrichtung nach Anspruch 2, **dadurch gekennzeichnet, dass** die mehreren ersten Elektroden (10) und mehreren zweiten Elektroden (11) auf der Kühloberfläche (KO) kammförmig, spiralförmig, mäanderförmig oder fächerförmig angeordnet sind.

4. Luftentfeuchtungseinrichtung nach einem der Ansprüche 1 bis 3, **dadurch gekennzeichnet, dass** zumindest eine der ersten Elektroden (10) oder zumindest eine der zweiten Elektroden (11) auf der Kühloberfläche (KO) aufgedampft, aufgedruckt, beschichtet oder angeklebt sind.

5. Luftentfeuchtungseinrichtung nach einem der Ansprüche 1 bis 4, **dadurch gekennzeichnet, dass** eine Steuereinheit (25) vorgesehen ist, die eingerichtet ist, bei Verwendung der Luftentfeuchtungseinrichtung (1) eine Kühlleistung des Peltier-Elements (2) zu steuern, um eine Temperatur der Kühloberfläche (KO) unterhalb des Taupunkts der Luft im Bereich des Peltier-Elements (2) aber oberhalb eines Gefrierpunktes von Kondenswasser zu halten.

6. Luftentfeuchtungseinrichtung nach Anspruch 5, **dadurch gekennzeichnet, dass** ein Feuchtigkeitssensor (23) vorgesehen ist, um eine Luftfeuchtigkeit im Bereich der Kühloberfläche (KO) zu messen und/oder ein Temperatursensor (26) vorgesehen ist, um eine Temperatur der Kühloberfläche (KO) oder im Bereich der Kühloberfläche (KO) zu messen, und die Steuereinheit die gemessene Luftfeuchtigkeit und/oder die gemessene Temperatur bei Verwendung der Luftentfeuchtungseinrichtung (1) zur Steuerung der Kühlleistung des Peltier-Elements (2) verwendet.

7. Luftentfeuchtungseinrichtung nach einem der Ansprüche 1 bis 6, **dadurch gekennzeichnet, dass** ein Stromsensor (7) vorgesehen ist, um bei Verwendung der Luftentfeuchtungseinrichtung (1) einen über die erste Elektrode (10) und die zweite Elektrode (11) fließenden elektrischen Elektrolysestrom (I2) zu messen und die Steuereinheit (25) eingerichtet ist, die Wasserelektrolyse mit dem gemessenen Elektrolysestrom (I2) zu steuern.

8. Luftentfeuchtungseinrichtung nach einem der Ansprüche 1 bis 6, **dadurch gekennzeichnet, dass** ein Stromsensor (7) vorgesehen ist, um bei Verwendung der Luftentfeuchtungseinrichtung (1) einen über die erste Elektrode (10) und die zweite Elektrode (11) fließenden elektrische Elektrolysestrom (I2) zu messen und die Steuereinheit (25) eingerichtet ist, aus dem gemessenen Elektrolysestrom (I2) die Menge an durch Wasserelektrolyse erzeugten Wasserstoff (H2) zu bestimmen.

9. Gerät mit einem Gehäuse (20), wobei im Gehäuse (20) eine Luftentfeuchtungseinrichtung (1) nach einem der Ansprüche 1 bis 8 angeordnet ist.

10. Gerät nach Anspruch 9, **dadurch gekennzeichnet, dass** der im Gehäuse (20) des Geräts (24) mit der Luftentfeuchtungseinrichtung (1) erzeugte Wasserstoff (H2) aus dem Gehäuse (20) abführbar ist, indem der Wasserstoff (H2) durch das Gehäuse (20) nach außen diffundiert.

11. Gerät nach Anspruch 10, **dadurch gekennzeichnet, dass** die Steuereinheit (25) aus einer ermittelten Menge an erzeugten Wasserstoff (H2) und einer bekannten Menge aufgrund von Diffusion durch das Gehäuse (20) entweichendem Wasserstoff (H2) eine Wasserstoffkonzentration im Gehäuseinnenraum (21) ermittelt **und dass** die Steuereinheit (25) eingerichtet ist, die Wasserelektrolyse über den Elektrolysestrom (I2) zu steuern, um die Wasserstoffkonzentration im Gehäuseinnenraum (21) unterhalb einer vorgegebenen zulässigen Wasserstoffkonzentration zu halten.

12. Verfahren zur Luftentfeuchtung, insbesondere eines Gehäuseinnenraumes (21) eines Gehäuses (20) eines Gerätes (24), mit einer Luftentfeuchtungseinrichtung (1) mit einem Peltier-Element (2) mit einer Kühlplatte (KP) mit Kühloberfläche (KO), wobei an das Peltier-Element (2) eine elektrische Gleichspannung (V1) angelegt wird, um die Kühloberfläche (KO) des Peltier-Elements (2) zu kühlen, um Luftfeuchtigkeit von Luft im Bereich des Peltier-Elements (2) auf der Kühloberfläche (KO) zu kondensieren, **dadurch gekennzeichnet, dass** zwischen zumindest einer ersten, auf der Kühloberfläche (KO) des Peltier-Elements (2) angeordneten Elektrode (10) und zumindest einer zweiten, auf der Kühloberfläche (KO) des Peltier-Elements (2) angeordneten Elektrode (11) eine elektrische Gleichspannung (V2) angelegt wird, sodass über die zumindest eine ersten Elektrode (10), auf der Kühloberfläche (KO) kondensiertes Kondenswasser (W) und die zumindest eine zweite Elektrode (11) ein elektrischer Elektrolysestrom (I2) fließt, um das auf der Kühloberfläche (KO) kondensiertes Kondenswasser (W) durch Wasserelektrolyse in Wasserstoff (H2) und Sauerstoff (O2) aufzuspalten.

13. Verfahren nach Anspruch 12, **dadurch gekennzeichnet, dass** eine Kühlleistung des Peltier-Elements (2) gesteuert wird, sodass eine Temperatur der Kühloberfläche (KO) unterhalb des Taupunkts der Luft im Bereich des Peltier-Elements (2) aber oberhalb eines Gefrierpunktes des Kondenswassers (W) gehalten wird.

14. Verfahren nach Anspruch 13, **dadurch gekennzeichnet, dass** eine Luftfeuchtigkeit im Bereich der Kühloberfläche (KO) und/oder eine Temperatur der Kühloberfläche (KO) oder im Bereich der Kühloberfläche (KO) gemessen wird, um damit die Kühlleistung des Peltier-Elements (2) zu steuern.

15. Verfahren nach einem der Ansprüche 12 bis 14, **dadurch gekennzeichnet, dass** der elektrische Elektrolysestrom (I2) gemessen wird und die Wasserelektrolyse mit dem gemessenen Elektrolysestrom (I2) gesteuert wird.

16. Verfahren nach einem der Ansprüche 12 bis 14, **dadurch gekennzeichnet, dass** der elektrische Elektrolysestrom (I2) gemessen wird und aus dem gemessenen Elektrolysestrom (I2) die Menge an durch Wasserelektrolyse erzeugten Wasserstoff (H2) bestimmt wird.

17. Verfahren nach Anspruch 16, **dadurch gekennzeichnet, dass** aus der bestimmten Menge an erzeugten Wasserstoff (H2) und einer bekannten Menge aufgrund von Diffusion durch das Gehäuse (20) entweichendem Wasserstoff (H2) eine Wasserstoffkonzentration im Gehäuseinnenraum (21) ermittelt wird **und dass** die Wasserelektrolyse über den Elektrolysestrom (I2) gesteuert wird, um die Wasserstoffkonzentration im Gehäuseinnenraum (21) unterhalb einer vorgegebenen zulässigen Wasserstoffkonzentration zu halten.

18. Verfahren nach einem der Ansprüche 12 bis 17, **dadurch gekennzeichnet, dass** während einer bestimmten Zeitdauer eine zeitliche Veränderung des elektrischen Leitwerts des auf der Kühloberfläche (KO) kondensierten Kondenswassers (W) ermittelt wird.

## Claims

1. Air dehumidification device comprising a Peltier element (2) having a cooling plate (KP) that has a cooling surface (KO) which can be cooled when an electrical direct voltage (V1) is applied to the Peltier element (2),
**characterized in that** at least one first electrode (10) and at least one second electrode (11) are arranged at a distance from one another on the cooling surface (KO) of the cooling plate (KP) of the Peltier element (2) **and in that** the at least one first electrode (10) is connected to a first connection pole (E2) and the at least one second electrode (11) is connected to a second connection pole (E1) and an electrical direct voltage (V2) can be applied to the connection poles (E1, E2).

2. Air dehumidification device according to claim 1, **characterized in that** a plurality of first electrodes (10) and a plurality of second electrodes (11) are arranged at a distance from one another on the cooling surface (KO) of the cooling plate (KP), the plurality of first electrodes (10) being electrically connected to one another and to the first connection pole (E2) and the plurality of second electrodes (11) being electrically connected to one another and to the second connection pole (E1).

3. Air dehumidification device according to claim 2, **characterized in that** the plurality of first electrodes (10) and plurality of second electrodes (11) are arranged on the cooling surface (KO) in a comb-shaped, spiral-shaped, meander-shaped or fan-shaped manner.

4. Air dehumidification device according to any of claims 1 to 3,
**characterized in that** at least one of the first electrodes (10) or at least one of the second electrodes (11) is vapor-deposited, printed, coated or glued onto the cooling surface (KO).

5. Air dehumidification device according to any of claims 1 to 4,
**characterized in that** a control unit (25) is provided which is configured to control a cooling capacity of the Peltier element (2) when the air dehumidification device (1) is used in order to keep a temperature of the cooling surface (KO) below the dew point of the air in the region of the Peltier element (2) but above a freezing point of condensed water.

6. Air dehumidification device according to claim 5, **characterized in that** a humidity sensor (23) is provided to measure an air humidity in the region of the cooling surface (KO) and/or a temperature sensor (26) is provided to measure a temperature of the cooling surface (KO) or in the region of the cooling surface (KO), and the control unit uses the measured air humidity and/or the measured temperature when using the air dehumidification device (1) to control the cooling capacity of the Peltier element (2).

7. Air dehumidification device according to any of claims 1 to 6,
**characterized in that** a current sensor (7) is provided to measure an electrical electrolysis current (12) flowing via the first electrode (10) and the second electrode (11) when the air dehumidification device (1) is used, and the control unit (25) is configured to control the water electrolysis with the measured electrolysis current (12).

8. Air dehumidification device according to any of claims 1 to 6,
**characterized in that** a current sensor (7) is provided to measure an electrical electrolysis current (12) flowing via the first electrode (10) and the second electrode (11) when the air dehumidification device (1) is used, and the control unit (25) is configured to ascertain the amount of hydrogen (H2) produced by water electrolysis from the measured electrolysis current (12).

9. Apparatus comprising a housing (20), wherein an air dehumidification device (1) according to any of claims 1 to 8 is arranged in the housing (20).

10. Apparatus according to claim 9, **characterized in that** the hydrogen (H2) produced in the housing (20) of the apparatus (24) having the air dehumidification device (1) can be discharged from the housing (20) by the hydrogen (H2) diffusing outward through the housing (20).

11. Apparatus according to claim 10, **characterized in that** the control unit (25) determines a hydrogen concentration in the housing interior (21) from a determined amount of hydrogen (H2) produced and a known amount of hydrogen (H2) escaping due to diffusion through the housing (20) **and in that** the control unit (25) is configured to control the water electrolysis via the electrolysis current (12) in order to keep the hydrogen concentration in the housing interior (21) below a predetermined permissible hydrogen concentration.

12. Method for dehumidifying air, in particular of a housing interior (21) of a housing (20) of an apparatus (24), using an air dehumidification device (1) comprising a Peltier element (2) having a cooling plate (KP) that has a cooling surface (KO), an electrical direct voltage (V1) being applied to the Peltier element (2) in order to cool the cooling surface (KO) of the Peltier element (2) in order to condense air humidity of air in the region of the Peltier element (2) on the cooling surface (KO), **characterized in that** an electrical direct voltage (V2) is applied between at least one first electrode (10) arranged on the cooling surface (KO) of the Peltier element (2) and at least one second electrode (11) arranged on the cooling surface (KO) of the Peltier element (2), so that an electrical electrolysis current (12) flows via the at least one first electrode (10), condensed water (W) condensed on the cooling surface (KO), and the at least one second electrode (11) in order to split the condensed water (W) condensed on the cooling surface (KO) into hydrogen (H2) and oxygen (O2) by water electrolysis.

13. Method according to claim 12, **characterized in that** a cooling capacity of the Peltier element (2) is controlled so that a temperature of the cooling surface (KO) is kept below the dew point of the air in the region of the Peltier element (2) but above a freezing point of the condensed water (W).

14. Method according to claim 13, **characterized in that** an air humidity in the region of the cooling surface (KO) and/or a temperature of the cooling surface (KO) or in the region of the cooling surface (KO) is measured in order to control the cooling capacity of the Peltier element (2).

15. Method according to any of claims 12 to 14, **characterized in that** the electrical electrolysis current (12) is measured and the water electrolysis is controlled using the measured electrolysis current (12).

16. Method according to any of claims 12 to 14, **characterized in that** the electrical electrolysis current (I2) is measured and the amount of hydrogen (H2) produced by water electrolysis is ascertained from the measured electrolysis current (12).

17. Method according to claim 16, **characterized in that** a hydrogen concentration in the housing interior (21) is determined from the ascertained amount of hydrogen (H2) produced and a known amount of hydrogen (H2) escaping due to diffusion through the housing (20) **and in that** the water electrolysis is controlled via the electrolysis current (12) in order to keep the hydrogen concentration in the housing interior (21) below a predetermined permissible hydrogen concentration.

18. Method according to any of claims 12 to 17, **characterized in that** during a certain period of time, a temporal change in the electrical conductivity of the condensed water (W) condensed on the cooling surface (KO) is determined.

## Revendications

1. Dispositif de déshumidification de l'air comportant un élément Peltier (2) comportant une plaque de refroidissement (KP) comportant une surface de refroidissement (KO), qui peut être refroidie lors de l'application d'une tension continue électrique (V1) à l'élément Peltier (2), **caractérisé en ce qu'**au moins une première électrode (10) et au moins une seconde électrode (11) sont disposées à distance l'une de l'autre sur la surface de refroidissement (KO) de la plaque de refroidissement (KP) de l'élément Peltier (2) **et en ce que** l'au moins une première électrode (10) est connectée à un premier pôle de raccordement (E2) et l'au moins une seconde électrode (11) est connectée à un second pôle de raccordement (E1) et une tension continue électrique (V2) peut être appliquée aux pôles de raccordement (E1, E2).

2. Dispositif de déshumidification de l'air selon la revendication 1,
**caractérisé en ce que** plusieurs premières électrodes (10) et plusieurs secondes électrodes (11) sont disposées à distance les unes des autres sur la surface de refroidissement (KO) de la plaque de refroidissement (KP), dans lequel les plusieurs premières électrodes (10) sont connectées électriquement entre elles et au premier pôle de raccordement (E2) et les plusieurs secondes électrodes (11) sont connectées électriquement entre elles et au second pôle de raccordement (E1).

3. Dispositif de déshumidification de l'air selon la revendication 2,
**caractérisé en ce que** les plusieurs premières électrodes (10) et les plusieurs secondes électrodes (11) sont disposées sur la surface de refroidissement (KO) en forme de peigne, de spirale, de méandre ou d'éventail.

4. Dispositif de déshumidification de l'air selon l'une des revendications 1 à 3, **caractérisé en ce qu'**au moins l'une des premières électrodes (10) ou au moins l'une des secondes électrodes (11) est vaporisée, imprimée, enduite ou collée sur la surface de refroidissement (KO).

5. Dispositif de déshumidification de l'air selon l'une des revendications 1 à 4, **caractérisé en ce qu'**une unité de commande (25) est prévue, qui est conçue, lors de l'utilisation du dispositif de déshumidification de l'air (1), pour commander une puissance de refroidissement de l'élément Peltier (2) pour maintenir une température de la surface de refroidissement (KO) inférieure au point de rosée de l'air dans la zone de l'élément Peltier (2) mais supérieure à un point de congélation de l'eau de condensation.

6. Dispositif de déshumidification de l'air selon la revendication 5,
**caractérisé en ce qu'**un capteur d'humidité (23) est prévu pour mesurer une humidité de l'air dans la zone de la surface de refroidissement (KO) et/ou un capteur de température (26) est prévu pour mesurer une température de la surface de refroidissement (KO) ou dans la zone de la surface de refroidissement (KO), et l'unité de commande utilise l'humidité de l'air mesurée et/ou la température mesurée lors de l'utilisation du dispositif de déshumidification de l'air (1) pour la commande de la puissance de refroidissement de l'élément Peltier (2).

7. Dispositif de déshumidification de l'air selon l'une des revendications 1 à 6, **caractérisé en ce qu'**un capteur de courant (7) est prévu pour mesurer, lors de l'utilisation du dispositif de déshumidification de l'air (1), un courant d'électrolyse (I2) électrique circulant à travers la première électrode (10) et la seconde électrode (11), et l'unité de commande (25) est conçue pour commander l'électrolyse de l'eau avec le courant d'électrolyse (I2) mesuré.

8. Dispositif de déshumidification de l'air selon l'une des revendications 1 à 6, **caractérisé en ce qu'**un capteur de courant (7) est prévu pour mesurer, lors de l'utilisation du dispositif de déshumidification de l'air (1), un courant d'électrolyse (I2) électrique circulant à travers la première électrode (10) et la seconde électrode (11) et l'unité de commande (25) est conçue pour déterminer, à partir du courant d'électrolyse (12) mesuré, la quantité d'hydrogène (H2) produite par électrolyse de l'eau.

9. Appareil comportant un boîtier (20), dans lequel un dispositif de déshumidification de l'air (1) selon l'une des revendications 1 à 8 étant disposé dans le boîtier (20).

10. Appareil selon la revendication 9, **caractérisé en ce que** l'hydrogène (H2) produit dans le boîtier (20) de l'appareil (24) avec le dispositif de déshumidification de l'air (1) peut être évacué du boîtier (20) en faisant diffuser l'hydrogène (H2) vers l'extérieur à travers le boîtier (20).

11. Appareil selon la revendication 10, **caractérisé en ce que** l'unité de commande (25) détermine une concentration en hydrogène dans l'espace intérieur (21) de boîtier à partir d'une quantité déterminée d'hydrogène (H2) produit et d'une quantité connue d'hydrogène (H2) s'échappant par diffusion à travers le boîtier (20), **et en ce que** l'unité de commande (25) est conçue pour commander l'électrolyse de l'eau par l'intermédiaire du courant d'électrolyse (I2) pour maintenir la concentration en hydrogène dans l'espace intérieur (21) de boîtier en dessous d'une concentration en hydrogène admissible prédéfinie.

12. Procédé de déshumidification de l'air, en particulier d'un espace intérieur (21) de boîtier d'un boîtier (20) d'un appareil (24), comportant un dispositif de déshumidification de l'air (1) comportant un élément Peltier (2) comportant une plaque de refroidissement (KP) comportant une surface de refroidissement (KO), dans lequel une tension continue électrique (V1) est appliquée à l'élément Peltier (2) pour refroidir la surface de refroidissement (KO) de l'élément Peltier (2) pour condenser l'humidité de l'air de l'air dans la zone de l'élément Peltier (2) sur la surface de refroidissement (KO), **caractérisé en ce qu'**entre au moins une première électrode (10) disposée sur la surface de refroidissement (KO) de l'élément Peltier (2) et au moins une seconde électrode (11) disposée sur la surface de refroidissement (KO) de l'élément Peltier (2), une tension continue électrique (V2) est appliquée, de sorte que, par l'intermédiaire de l'au moins une première électrode (10), de l'eau de condensation (W) condensée sur la surface de refroidissement (KO) et de l'au moins une seconde électrode (11), un courant d'électrolyse (I2) électrique circule pour décomposer l'eau de condensation (W) condensée sur la surface de refroidissement (KO) en hydrogène (H2) et en oxygène (O2) par électrolyse de l'eau.

13. Procédé selon la revendication 12, **caractérisé en ce qu'**une puissance de refroidissement de l'élément Peltier (2) est commandée de sorte qu'une température de la surface de refroidissement (KO) est maintenue en dessous du point de rosée de l'air dans la zone de l'élément Peltier (2) mais au-dessus d'un point de congélation de l'eau de condensation (W).

14. Procédé selon la revendication 13, **caractérisé en ce qu'**une humidité de l'air dans la zone de la surface de refroidissement (KO) et/ou une température de la surface de refroidissement (KO) ou dans la zone de la surface de refroidissement (KO) est mesurée pour commander ainsi la puissance de refroidissement de l'élément Peltier (2).

15. Procédé selon l'une des revendications 12 à 14, **caractérisé en ce que** le courant d'électrolyse (I2) électrique est mesuré et l'électrolyse de l'eau est commandée avec le courant d'électrolyse (I2) électrique mesuré.

16. Procédé selon l'une des revendications 12 à 14, **caractérisé en ce que** le courant d'électrolyse (I2) électrique est mesuré et la quantité d'hydrogène (H2) produite par électrolyse de l'eau est déterminée à partir du courant d'électrolyse (I2) électrique mesuré.

17. Procédé selon la revendication 16, **caractérisé en ce qu'**une concentration en hydrogène dans l'espace intérieur (21) de boîtier est établie à partir de la quantité déterminée d'hydrogène (H2) produit et d'une quantité connue d'hydrogène (H2) s'échappant par diffusion à travers le boîtier (20), **et en ce que** l'électrolyse de l'eau est commandée par l'intermédiaire du courant d'électrolyse (I2) pour maintenir la concentration en hydrogène dans l'espace intérieur (21) de boîtier en dessous d'une concentration en hydrogène admissible prédéfinie.

18. Procédé selon l'une des revendications 12 à 17, **caractérisé en ce que,** pendant une durée déterminée, une variation temporelle de la conductance électrique de l'eau de condensation (W) condensée sur la surface de refroidissement (KO) est établie.
